# EUROPÄISCHE PATENTSCHRIFT

(11) **EP 3 566 934 B1**
(45) Veröffentlichungstag und Bekanntmachung des Hinweises auf die Patenterteilung: **07.09.2022**
(21) Anmeldenummer: 19170149.9
(22) Anmeldetag: 18.04.2019
(51) Int. Cl.: B62H 5/14, B62H 5/20, B62H 5/18, B60R 25/24, B60R 25/09, B60R 25/08

(54) **BREMSSCHEIBENSCHLOSS**
BRAKE DISC LOCK
SERRURE DE DISQUE DE FREIN

(30) Priorität: 11.05.2018 DE 102018111287
(43) Veröffentlichungstag der Anmeldung: 13.11.2019
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 1 724 165
- EP-A2- 1 764 292
- WO-A1-2011/010768
- DE-U1- 9 209 927
- JP-A- H11 278 331
- NL-C2- 2 000 149

## Beschreibung

Die vorliegende Erfindung betrifft ein Bremsscheibenschloss mit einer Bremsscheibendetektionseinrichtung, einem Sensor zur Detektion einer Lageänderung des Schlosses und einem Alarmmodul, welches dazu ausgebildet ist, einen Alarm auszugeben, wenn der Sensor eine relevante Lageänderung des Schlosses detektiert.

Derartige Bremsscheibenschlösser sind grundsätzlich bekannt und werden insbesondere zur Sicherung von Motorrädern oder Motorrollern eingesetzt. Der Sensor und das Alarmmodul dienen der Erhöhung des Diebstahlschutzes, indem bei einem Angriff auf das Schloss eine Bewegung desselben detektiert und zur Abschreckung ein Alarm ausgegeben wird. Dabei sorgt die Bremsscheibendetektionseinrichtung dafür, dass die Bewegungsdetektion und gegebenenfalls Ausgabe eines Alarms nur dann erfolgt, wenn das Schloss tatsächlich an einer Bremsscheibe angebracht ist. Herkömmliche Bremsscheibenschlösser weisen einen Schließzylinder auf und lassen sich dementsprechend durch einen dem Schloss zugeordneten Schlüssel entriegeln.

So zeigt die EP 1 764 292 A2 ein mittels eines Schlüssels betätigbares Bremsscheibenschloss mit einer elektrischen Alarmeinrichtung sowie einer Bremsscheibenerkennungseinrichtung.

Aus der WO 2011/010768 A1 ist ein Motorradschloss, beispielsweise zur Anbringung an einer Bremsscheibe, bekannt, das mittels einer Fernbedienung elektrisch betätigbar ist und zudem ein Alarmmodul aufweist.

Die DE 92 09 927 U1 zeigt ein Motorrad- oder Autoschloss, das mittels einer Fernbedienung anstelle eines Schlüssels betätigbar ist.

Der Erfindung liegt die Aufgabe zugrunde, ein Bremsscheibenschloss zu schaffen, welches sich durch eine komfortablere und sicherere Bedienung auszeichnet.

Die Aufgabe wird durch ein Bremsscheibenschloss mit den Merkmalen des Anspruchs 1 und insbesondere dadurch gelöst, dass das Bremsscheibenschloss einen Entriegelungsmotor zur Entriegelung des Schlosses, ein Authentifizierungsmodul zur drahtlosen Authentifizierung eines Nutzers des Schlosses sowie ein durch den Nutzer betätigbares Betätigungselement umfasst, mittels welchem das Authentifizierungsmodul aktivierbar ist.

Der Erfindung liegt der allgemeine Gedanke zugrunde, die Entriegelung des Bremsscheibenschlosses anders als herkömmlicherweise üblich nicht mittels eines zu dem Bremsscheibenschloss passenden physischen Schlüssels vorzunehmen, sondern stattdessen eine drahtlose Authentifizierung des Nutzers durchzuführen, indem sich das Bremsscheibenschloss, genauer gesagt das Authentifizierungsmodul, beispielsweise via Bluetooth mit einem mobilen Endgerät des Nutzers verbindet, zum Beispiel mit einem Smartphone, einer Smartwatch oder einer dem Bremsscheibenschloss zugeordneten Fernbedienung, und im Falle einer erfolgreichen Nutzerauthentifizierung das Authentifizierungsmodul den Entriegelungsmotor, vorzugsweise einen Elektromotor, zur Entriegelung des Bremsscheibenschlosses aktiviert. Der Nutzer braucht für die Entriegelung des Bremsscheibenschloss es also keinen physischen Schlüssel zur Hand zu nehmen, sondern lediglich das mobile Endgerät mit sich zu führen. Aufgrund der drahtlosen Kommunikation zwischen Authentifizierungsmodul und mobilem Endgerät braucht der Nutzer das mobile Endgerät für die Authentifizierung noch nicht einmal aus einer Tasche hervorzuholen.

Um zu verhindern, dass das Bremsscheibenschloss unbeabsichtigterweise bereits dann entriegelt wird, wenn sich der Nutzer mit seinem mobilen Endgerät nur in der Nähe des Schlosses befindet, muss der Nutzer für eine tatsächliche Entriegelung des Bremsscheibenschlosses eine bewusste Handlung durchführen, nämlich das Betätigungselement betätigen, beispielsweise indem er einen Riegel des Schlosses in einen Schlosskörper des Schlosses hineinschiebt und/oder den Riegel aus einer Geschlossenstellung in eine Überhubstellung verlagert. Erst durch die Betätigung des Betätigungselements wird das Authentifizierungsmodul dazu gebracht, einen Authentifizierungsvorgang durchzuführen. Eine erfolgreiche Nutzerauthentifizierung resultiert dabei in einer Aktivierung des Entriegelungmotors, durch welche das Schloss entriegelt wird.

In jedem Fall führt eine relevante Lageänderung des Schlosses, sei es bei einem Angriff auf das Schloss oder bei einer Betätigung des Betätigungselements, zur Ausgabe eines Alarms, welcher im Falle eines Angriffs zur Abschreckung beiträgt und welcher im Falle einer Betätigung des Betätigungselements durch den Nutzer den Nutzer daran erinnern soll, dass Schloss nicht nur zu entriegeln, sondern auch von der Bremsscheibe abzunehmen. Im letzteren Fall hat der Alarm die Funktion eines Vergessschutzes, d.h. der Alarm soll verhindern, dass der Nutzer vergisst, das entriegelte Schloss von der Bremsscheibe abzunehmen. Auf diese Weise kann die Gefahr deutlich reduziert werden, dass der Nutzer mit dem Motorrad oder Motorroller anfährt, während das entriegelte Schloss noch an der Bremsscheibe hängt, was zu erheblichen Schäden am Motorrad oder Motorroller führen kann.

Vorteilhafte Ausbildungen der Erfindung sind den Unteransprüchen, der Beschreibung und der Zeichnung zu entnehmen.

Gemäß einer Ausführungsform liegt eine relevante Lageänderung vor, wenn sich die Lage des Schlosses relativ zu einer Ausgangslage in wenigstens einer Raumrichtung um mehr als einen vorbestimmten Betrag ändert. Beispielsweise kann ein Alarm ausgegeben werden, wenn der Sensor eine Winkeländerung des Schlosses von mehreren Grad, zum Beispiel von 4°, um wenigstens eine Raumachse detektiert. Bei dem Sensor kann es sich beispielsweise um einen Beschleunigungssensor handeln.

Als Ausgangslage kann diejenige Lage des Schlosses herangezogen werden, die der Sensor ermittelt, wenn die Bremsscheibendetektionseinrichtung die Anwesenheit einer Bremsscheibe detektiert und das Schloss seine Lage für eine vorbestimmte Mindestdauer nicht verändert hat. Die vorbestimmte Mindestzeitdauer kann dabei im Bereich von einigen Sekunden liegen und beispielsweise 5 s betragen.

Gemäß einer weiteren Ausführungsform ist das Alarmmodul dazu ausgebildet, den Sensor nur dann auszulesen, wenn die Bremsscheibendetektionseinrichtung die Anwesenheit einer Bremsscheibe detektiert. Voraussetzung für die Ausgabe eines Alarms ist also, dass das Schloss an einer Bremsscheibe angebracht ist. Bei nicht bestimmungsgemäßer Verwendung des Schlosses, z.B. während eines Transports des Schlosses, ist die Alarmfunktionalität also abgeschaltet.

Vorteilhafterweise ist das Alarmmodul dazu ausgebildet, eine Alarmausgabe abzubrechen, wenn innerhalb eines vorbestimmten Zeitraums nach der relevanten Lageänderung keine weitere Lageänderung detektiert wird oder wenn eine Nutzerauthentifizierung erfolgreich durchgeführt wurde. Der vorbestimmte Zeitraum ist vorzugsweise zumindest nicht wesentlich größer gewählt als die Zeit, welche zur Durchführung der Nutzerauthentifizierung benötigt wird, und kann beispielsweise < 2 s und bevorzugt < 1 s sein. Auf diese Weise ist sichergestellt, dass zwar die Vergessschutzfunktion erfüllt wird, der Nutzer im Falle einer erfolgreichen Nutzerauthentifizierung aber nicht durch einen anhaltenden Alarm gestört wird. Außerdem kann, wenn keine weitere Lageänderung des Schlosses detektiert wird, davon ausgegangen werden, dass es sich nicht um einen Angriff auf das Schloss handelt, sondern die Lageänderung beispielsweise durch ein vorbeistreifendes Tier verursacht wurde, in welchem Fall die Ausgabe eines anhaltenden Alarms ebenfalls unnötig ist.

Gemäß noch einer weiteren Ausführungsform ist das Authentifizierungsmodul durch die Anbringung des Schlosses an einer Bremsscheibe aktivierbar. Dies ermöglicht auch bei der Anbringung des Schlosses an der Bremsscheibe eine Authentifizierung des Nutzers und im Falle einer erfolgreichen Nutzerauthentifizierung eine Aktivierung des Entriegelungmotors zur Verriegelung des Schlosses. Für eine noch weitere Erhöhung des Bedienkomforts kann außerdem eine optische und/oder akustische Statusanzeige zur Signalisierung des Ladezustands einer Energieversorgung des Schlosses vorgesehen sein. Vorzugsweise wird der Ladezustand bei jeder Aktivierung des Entriegelungsmotors signalisiert. Weiterer Gegenstand der Erfindung ist ein Schließsystem mit einem Bremsscheibenschloss der voranstehend beschriebenen Art und einem mobilen Endgerät, mittels welchem sich ein Nutzer des Schlosses an diesem authentisieren kann. Die voranstehend im Zusammenhang mit dem Bremsscheibenschloss genannten Vorteile gelten für das erfindungsgemäße Schließsystem entsprechend.

Damit das mobile Endgerät mit dem Authentifizierungsmodul des Schlosses kommunizieren kann, umfasst vorteilhafterweise auch das mobile Endgerät eine Sende/Empfangseinheit, um eine drahtlose Verbindung mit dem Authentifizierungsmodul des Schlosses herzustellen.

Wie bereits erwähnt kann das mobile Endgerät eine Fernbedienung oder ein tragbarer Computer sein, insbesondere eine Smartwatch, ein Smartphone, ein Tablet etc.

Weiterer Gegenstand der Erfindung ist außerdem ein Verfahren mit den Merkmalen des Anspruchs 10, durch welches sich die voranstehend genannten Vorteile entsprechend erreichen lassen.

Nachfolgend wird die Erfindung rein beispielhaft anhand einer möglichen Ausführungsform unter Bezugnahme auf die beigefügte Zeichnung beschrieben. Es zeigen:
- Fig. 1: eine schematische Darstellung eines erfindungsgemäßen Bremsscheibenschlosses in einem geöffneten Zustand;
- Fig. 2: eine schematische Darstellung des Bremsscheibenschlosses von Fig. 1 in einem geschlossenen Zustand; und
- Fig. 3: eine schematische Darstellung des Bremsscheibenschlosses von Fig. 1 in einem Überhubzustand.

Das in den Figuren dargestellte Bremsscheibenschloss 10 umfasst einen Schlosskörper 12, welcher eine Aufnahme 14 für eine Bremsscheibe 16 ausbildet. Zur Detektion einer in der Aufnahme 14 aufgenommenen Bremsscheibe 16 weist das Bremsscheibenschloss 10 eine Bremsscheibendetektionseinrichtung 18 auf, welche einen verdrehbar gelagerten und in die Aufnahme 14 hineinragenden Detektionshebel 20 umfasst, der durch eine in der Aufnahme 14 aufgenommene Bremsscheibe 16 verdreht wird und einen Schalter 22 betätigt. Der Schalter 22 ist derart angeordnet und ausgebildet, dass er einen geschlossenen Zustand einnimmt, wenn sich keine Bremsscheibe 16 in der Aufnahme 14 befindet, und einen geöffneten Zustand einnimmt, wenn eine Bremsscheibe 16 in der Aufnahme 14 aufgenommen ist.

Zur Sicherung der in der Aufnahme 14 aufgenommenen Bremsscheibe 16 umfasst das Schloss 10 einen in dem Schlosskörper 12 verschiebbar gelagerten Riegel 24, der im Bereich seines dem Schlosskörper 12 abgewandten Endes einen sich quer zur Verschiebungsrichtung erstreckenden Riegelbolzen 26 aufweist, welcher durch eine in der Bremsscheibe 16 vorgesehene Bohrung 17 durchgeführt werden kann.

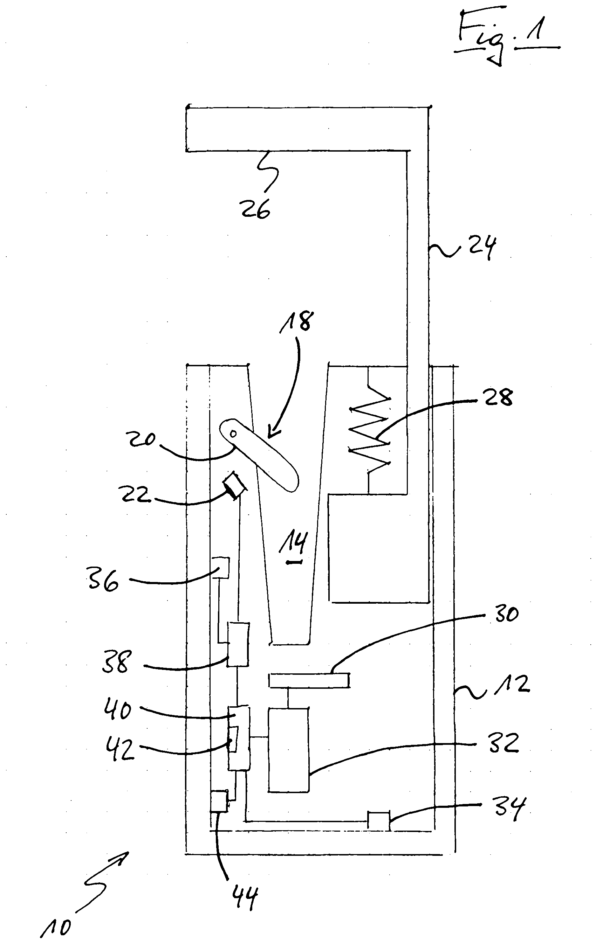

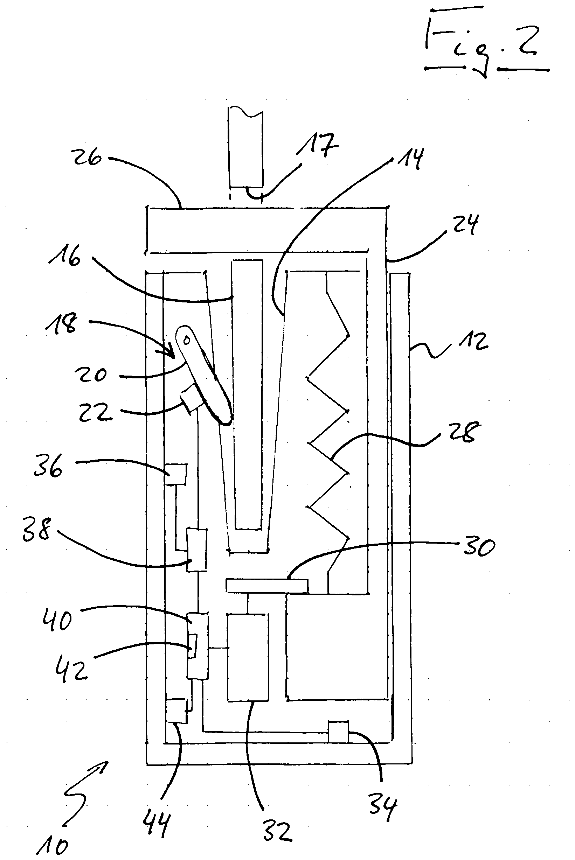

Der Riegel 24 ist aus einer aus dem Schlosskörper 12 teilweise ausgefahrenen Offenstellung (Fig. 1), in welcher eine Montage des Schlosses an einer Bremsscheibe 16 möglich ist, entgegen der Rückstellkraft einer Öffnungsfeder 28 in eine Geschlossenstellung in den Schlosskörper 12 hinein verschiebbar, in welcher der Riegel 24 mittels eines Verriegelungselements 30 blockiert bzw. verriegelt wird (Fig. 2).

Zur Öffnung des Schlosses 10 kann das Verriegelungselement 30 mithilfe eines Entriegelungmotors 32, hier in Form eines Elektromotors, von dem Riegel 24 gelöst werden, sodass der Riegel 24 durch die Öffnungsfeder 28 in seine Offenstellung gedrängt wird, gewissermaßen also aufspringt.

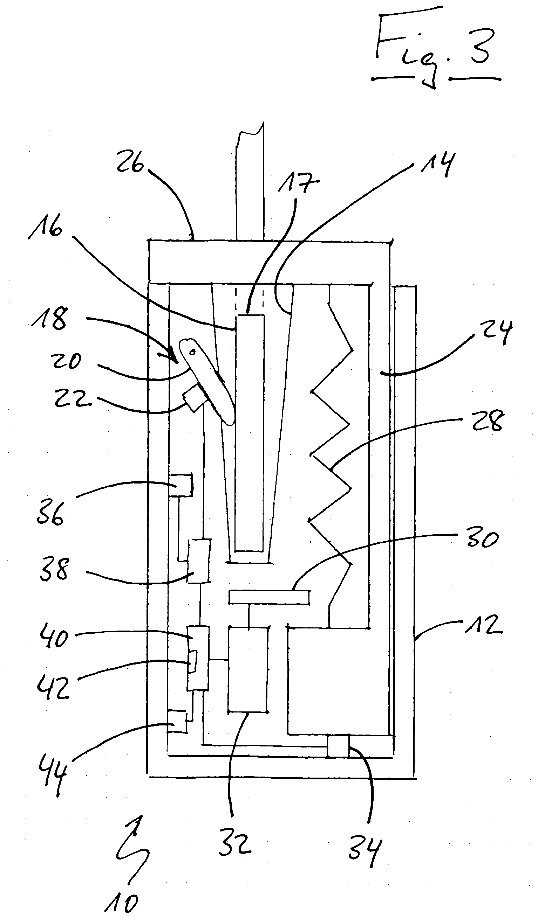

Durch Zusammendrücken von Riegel 24 und Schlosskörper 12 kann der Riegel 24 über seine Geschlossenstellung (Fig. 2) hinaus in den Schlosskörper 12 eingefahren werden, bis er eine Überhubstellung erreicht (Fig. 3), welche durch einen Überhubschalter 34 erfasst wird.

Das Schloss weist ferner einen Sensor 36 zur Detektion einer Lageänderung des Schlosses 10 auf. Beispielsweise kann es sich bei dem Sensor 36 um einen Beschleunigungssensor handeln.

Der Sensor 36 ist mit einem Alarmmodul 38 verbunden, welches einen, insbesondere akustischen, Alarm ausgibt, wenn die Bremsscheibendetektionseinrichtung 18 eine in der Aufnahme 14 aufgenommene Bremsscheibe 16 und der Sensor 36 eine relevante Lageänderung detektiert. Eine relevante Lageänderung kann beispielsweise dann vorliegen, wenn sich die Lage des Schlosses 10 relativ zu einer Ausgangslage des Schlosses 10 in wenigstens einer Raumrichtung um mehr als einen vorbestimmten Betrag ändert. Insbesondere kann eine relevante Lageänderung dann vorliegen, wenn der Sensor 36 eine Winkeländerung am Schloss 10 um wenigstens eine Raumachse erfasst, die größer als zum Beispiel 4° ist.

Als Ausgangslage des Schlosses 10 wird diejenige Lage des Schlosses 10 bezeichnet, die der Sensor 36 ermittelt, wenn die Bremsscheibendetektionseinrichtung 18 die Anwesenheit einer Bremsscheibe 16 in der Aufnahme 14 detektiert und das Schloss 10 seine Lage für eine vorbestimmte Mindestdauer im Bereich von einigen Sekunden, beispielsweise von 5 Sekunden, nicht verändert hat.

Zur Überprüfung der Berechtigung eines das Schloss 10 bedienenden Nutzers weist das Schloss 10 ferner ein Authentifizierungsmodul 40 auf, welches über eine Bluetooth-fähige Sende/Empfangseinheit 42 verfügt, die dazu ausgebildet ist, eine drahtlose Verbindung zu einem hier nicht gezeigten mobilen Endgerät des Nutzers aufzubauen, beispielsweise einem Smartphone, einer Smartwatch oder einer dem Schloss 10 zugeordneten Fernbedienung, um den Nutzer anhand des mobilen Endgeräts zu authentifizieren.

Das Authentifizierungsmodul 40 ist mit dem Überhubschalter 34 verbunden und wird aktiviert, sobald der Überhubschalter 34 betätigt wird. Um das Authentifizierungsmodul 40 zu aktivieren und einen Authentifizierungsvorgang auszulösen, muss der Nutzer den Riegel 24 und den Schlosskörper 12 also bewusst über die Geschlossenstellung des Riegels 24 hinaus zusammendrücken, bis der Riegel 24 seine Überhubstellung erreicht und der Überhubschalter 34 betätigt wird. Der Überhubschalter 34 bildet mit anderen Worten also ein Betätigungselement 34, dessen Betätigung Voraussetzung für eine Entriegelung des Schlosses 10 ist.

Soll nicht nur die Entriegelung, sondern auch die Verriegelung des Schlosses 10 elektronisch erfolgen, so ist es vorstellbar, dass der Riegel 24 auch zur Verriegelung in seine Überhubstellung gebracht werden muss, um den Überhubschalter 34 zu betätigen und hierdurch das Authentifizierungsmodul 40 zu aktivieren und einen Authentifizierungsvorgang auszulösen.

Da die Betätigung des Betätigungselements 34 üblicherweise nicht ohne eine durch den Sensor 36 detektierte Lageänderung des Schlosses 10 geschehen wird, gibt das Alarmmodul 38 bei Betätigung des Betätigungselements 34 zwangsläufig einen Alarm aus. Aufgrund der durch die Betätigung des Betätigungselements 34 ausgelösten Nutzerauthentifizierung kann das Authentifizierungsmodul 40 aber feststellen, ob die Bewegung des Schlosses 10 durch einen autorisierten Nutzer erfolgt, in welchem Fall der Alarm abgeschaltet wird.

Sollte die Nutzerauthentifizierung nicht erfolgreich verlaufen, gleichzeitig aber keine weitere Lageänderung des Schlosses 10 detektiert werden, so wird davon ausgegangen, dass die den Alarm auslösende Lageänderung des Schlosses 10 unbeabsichtigt war, und der Alarm wird ebenfalls abgeschaltet.

Lediglich im Falle einer nicht erfolgreichen Nutzerauthentifizierung und fortgesetzten Bewegung bzw. Lageänderung des Schlosses wird davon ausgegangen, dass ein unbefugter Angriff auf das Schloss 10 stattfindet, und die Alarmausgabe wird zum Schutz vor Diebstahl beibehalten.

Schließlich umfasst das Schloss 10 auch eine optische und/oder akustische Statusanzeige 44 zur Signalisierung des Ladezustands einer nicht dargestellten Energieversorgung des Schlosses 10, welche bei jeder Aktivierung des Entriegelungsmotors 32 aktiviert wird.

### Bezugszeichenliste

- 10: Schloss
- 12: Schlosskörper
- 14: Aufnahme
- 16: Bremsscheibe
- 17: Bohrung
- 18: Bremsscheibendetektionseinrichtung
- 20: Detektionshebel
- 22: Schalter
- 24: Riegel
- 26: Riegelbolzen
- 28: Öffnungsfeder
- 30: Verriegelungselement
- 32: Entriegelungsmotor
- 34: Überhubschalter
- 36: Sensor
- 38: Alarmmodul
- 40: Authentifizierungsmodul
- 42: Sende/Empfangseinheit
- 44: Statusanzeige

## Patentansprüche

1. Bremsscheibenschloss (10) mit
einer Bremsscheibendetektionseinrichtung (18),
einem Sensor (36) zur Detektion einer Lageänderung des Schlosses und
einem Alarmmodul (38), welches dazu ausgebildet ist, einen Alarm auszugeben, wenn der Sensor (36) eine relevante Lageänderung des Schlosses detektiert,
und
einem Entriegelungsmotor (32) zur Entriegelung des Schlosses,
einem Authentifizierungsmodul (40) zur drahtlosen Authentifizierung eines Nutzers des Schlosses und
einem durch den Nutzer betätigbaren Betätigungselement (34), mittels welchem das Authentifizierungsmodul (40) aktivierbar ist.

2. Schloss (10) nach Anspruch 1,
**dadurch gekennzeichnet, dass** eine relevante Lageänderung vorliegt, wenn sich die Lage des Schlosses relativ zu einer Ausgangslage in wenigstens einer Raumrichtung um mehr als einen vorbestimmten Betrag ändert, insbesondere wobei die Ausgangslage diejenige Lage des Schlosses (10) ist, die der Sensor ermittelt, wenn die Bremsscheibendetektionseinrichtung (18) die Anwesenheit einer Bremsscheibe (16) detektiert und das Schloss (10) seine Lage für eine vorbestimmte Mindestdauer nicht verändert hat, insbesondere wobei die vorbestimmte Mindestzeitdauer im Bereich von einigen Sekunden liegt und beispielsweise 5 s beträgt.

3. Schloss (10) nach Anspruch 1 oder 2,
**dadurch gekennzeichnet, dass**
das Alarmmodul (38) dazu ausgebildet ist, den Sensor (36) nur dann auszulesen, wenn die Bremsscheibendetektionseinrichtung (18) die Anwesenheit einer Bremsscheibe (16) detektiert; und/oder
das Alarmmodul (38) dazu ausgebildet ist, eine Alarmausgabe abzubrechen, wenn innerhalb eines vorbestimmten Zeitraums nach der relevanten Lageänderung keine weitere Lageänderung detektiert wird oder wenn eine Nutzerauthentifizierung erfolgreich durchgeführt wurde.

4. Schloss (10) nach zumindest einem der vorstehenden Ansprüche,
**dadurch gekennzeichnet, dass**
das Authentifizierungsmodul (40) durch die Anbringung des Schlosses an einer Bremsscheibe (16) aktivierbar ist.

5. Schloss (10) nach zumindest einem der vorstehenden Ansprüche,
**gekennzeichnet durch**
eine optische und/oder akustische Statusanzeige (44) zur Signalisierung des Ladezustands einer Energieversorgung des Schlosses, insbesondere bei jeder Aktivierung des Entriegelungsmotors (32).

6. Schloss (10) nach zumindest einem der vorstehenden Ansprüche,
**dadurch gekennzeichnet, dass**
das Schloss (10) einen Riegel (24) aufweist, der aus einer Offenstellung in eine Geschlossenstellung und aus der Geschlossenstellung in eine Überhubstellung verlagerbar ist, und das Betätigungselement (34) durch einen Überhubschalter gebildet ist, welcher durch eine Verlagerung des Riegels (24) in die Überhubstellung betätigbar ist.

7. Schloss (10) nach zumindest einem der vorstehenden Ansprüche, **dadurch gekennzeichnet, dass** das Schloss (10) einen Schlosskörper (12) und einen in dem Schlosskörper (12) verschiebbar gelagerten Riegel (24) aufweist und das Betätigungselement (34) durch Hineinschieben des Riegels (24) in den Schlosskörper (12) betätigbar ist.

8. Schließsystem umfassend ein Bremsscheibenschloss (10) nach einem der vorherigen Ansprüche und ein mobiles Endgerät, mittels welchem sich ein Nutzer des Schlosses (10) an diesem authentisieren kann.

9. Schließsystem nach Anspruch 8,
**dadurch gekennzeichnet, dass**
das mobile Endgerät eine Sende/Empfangseinheit umfasst, um eine drahtlose Verbindung mit dem Authentifizierungsmodul (40) des Schlosses (10) herzustellen; und/oder
das mobile Endgerät eine Fernbedienung oder ein tragbarer Computer ist, insbesondere eine Smartwatch, ein Smartphone, ein Tablet, etc.

10. Verfahren zum Entriegeln eines elektronischen Bremsscheibenschlosses (10) nach Anspruch 1, fahren
das Authentifizierungsmodul (40) durch Betätigung des Betätigungselements (34) aktiviert wird und
das Alarmmodul (38) einen Alarm ausgibt, wenn der Sensor (36) eine relevante Lageänderung des Schlosses (10) detektiert.

11. Verfahren nach Anspruch 10,
**dadurch gekennzeichnet, dass**
eine relevante Lageänderung vorliegt, wenn sich die Lage des Schlosses (10) relativ zu einer Ausgangslage in wenigstens einer Raumrichtung um mehr als einen vorbestimmten Betrag ändert, insbesondere wobei die Ausgangslage diejenige Lage des Schlosses (10) ist, die der Sensor (36) ermittelt, wenn die Bremsscheibendetektionseinrichtung (18) die Anwesenheit einer Bremsscheibe (16) detektiert und das Schloss (10) seine Lage für eine vorbestimmte Mindestdauer nicht verändert hat, insbesondere wobei die vorbestimmte Mindestzeitdauer im Bereich von einigen Sekunden liegt und beispielsweise 5 s beträgt.

12. Verfahren nach Anspruch 10 oder 11,
**dadurch gekennzeichnet, dass**
der Sensor (36) nur solange ausgelesen wird, wie die Bremsscheibendetektionseinrichtung (18) die Anwesenheit einer Bremsscheibe detektiert.

13. Verfahren nach einem der Ansprüche 10 bis 12,
**dadurch gekennzeichnet, dass**
das Alarmmodul (38) die Alarmausgabe abbricht, wenn innerhalb eines vorbestimmten Zeitraums nach der relevanten Lageänderung keine weitere Lageänderung detektiert wird oder wenn eine Nutzerauthentifizierung erfolgreich durchgeführt wurde.

14. Verfahren nach einem der Ansprüche 10 bis 13,
**dadurch gekennzeichnet, dass**
das Authentifizierungsmodul (40) aktiviert wird, wenn die Bremsscheibendetektionseinrichtung (18) die Anbringung des Schlosses (10) an einer Bremsscheibe (16) detektiert.

15. Verfahren nach einem der Ansprüche 10 bis 14,
**dadurch gekennzeichnet, dass**
das Betätigungselement (34) durch Hineinschieben eines Riegels (24) des Schlosses (10) in einen Schlosskörper (12) des Schlosses (10) und/oder durch Verlagern eines Riegels (24) des Schlosses (10) aus einer Geschlossenstellung in eine Überhubstellung betätigt wird.

## Claims

1. A brake disk lock (10) comprising
a brake disk detection device (18);
a sensor (36) for detecting a positional change of the lock; and
an alarm module (38) which is configured to output an alarm when the sensor (36) detects a relevant positional change of the lock; and
an unlocking motor (32) for unlocking the lock;
an authentication module (40) for a wireless authentication of a user of the lock; and
an actuation element (34) which can be actuated by the user and by means of which the authentication module (40) can be activated.

2. A lock (10) in accordance with claim 1,
**characterized in that**
a relevant positional change is present when the position of the lock relative to a starting position changes by more than a predefined amount in at least one spatial direction, in particular with that position of the lock (10) being the starting position that the sensor determines when the brake disk detection device (18) detects the presence of a brake disk (16) and the lock (10) has not changed its position for a predefined minimum period, in particular with the predefined minimum time period being in the range of some seconds and amounting to 5 s, for example.

3. A lock (10) in accordance with claim 1 or claim 2,
**characterized in that**
the alarm module (38) is configured only to read the sensor (36) when the brake disk detection device (18) detects the presence of a brake disk (16); and/or
**in that** the alarm module (38) is configured to abort an alarm output when no further positional change is detected within a predefined time period after the relevant positional change or when a user authentication has been successfully carried out.

4. A lock (10) in accordance with at least one of the preceding claims,
**characterized in that**
the authentication module (40) can be activated by the attachment of the lock to a brake disk (16).

5. A lock (10) in accordance with at least one of the preceding claims,
**characterized by**
a visual and/or acoustic status display (44) for signaling the charge state of an energy supply of the lock, in particular on every activation of the unlocking motor (32).

6. A lock (10) in accordance with at least one of the preceding claims,
**characterized in that**
the lock (10) has a latch (24) which can be moved from an open position into a closed position and from the closed position into an overlift position; and **in that** the actuation element (34) is formed by an overlift switch which can be actuated by a movement of the latch (24) into the overlift position.

7. A lock (10) in accordance with at least one of the preceding claims,
**characterized in that**
the lock (10) has a lock body (12) and a latch (24) displaceably supported in the lock body (12); and **in that** the actuation element (34) can be actuated by pushing the latch (24) into the lock body (12).

8. A locking system comprising a brake disk lock (10) in accordance with any one of the preceding claims and a mobile end device by means of which a user of the lock (10) can authenticate himself thereat.

9. A locking system in accordance with claim 8,
**characterized in that**
the mobile end device comprises a transmission/reception unit to establish a wireless connection to the authentication module (40) of the lock (10); and/or
**in that** the mobile end device is a remote control or a portable computer, in particular a smart watch, a smartphone, a tablet, etc.

10. A method of unlocking an electronic brake disk lock (10) in accordance with claim 1, in which method
the authentication module (40) is activated by actuating the actuation element (34); and
the alarm module (38) outputs an alarm when the sensor (36) detects a relevant positional change of the lock (10).

11. A method in accordance with claim 10,
**characterized in that**
a relevant positional change is present when the position of the lock (10) relative to a starting position changes by more than a predefined amount in at least one spatial direction, in particular with that position of the lock (10) being the starting position that the sensor (36) determines when the brake disk detection device (18) detects the presence of a brake disk (16) and the lock (10) has not changed its position for a predefined minimum period, in particular with the predefined minimum time period being in the range of some seconds and amounting to 5 s, for example.

12. A method in accordance with claim 10 or claim 11,
**characterized in that**
the sensor (36) is only read for so long as the brake disk detection device (18) detects the presence of a brake disk.

13. A method in accordance with any one of the claims 10 to 12,
**characterized in that**
the alarm module (38) aborts the alarm output when no further positional change is detected within a predefined time period after the relevant positional change or when a user authentication has been successfully carried out.

14. A method in accordance with any one of the claims 10 to 13,
**characterized in that**
the authentication module (40) is activated when the brake disk detection device (18) detects the attachment of the lock (10) to a brake disk (16).

15. A method in accordance with any one of the claims 10 to 14,
**characterized in that**
the actuation element (34) is actuated by pushing a latch (24) of the lock (10) into a lock body (12) of the lock (10) and/or by moving a latch (24) of the lock (10) from a closed position into an overlift position.

## Revendications

1. Antivol pour disque de frein (10), comportant
un dispositif de détection de disque de frein (18),
un capteur (36) pour détecter un changement de position de l'antivol, et
un module d'alarme (38) qui est réalisé pour émettre une alarme si le capteur (36) détecte un changement de position pertinent de l'antivol,
et
un moteur de déverrouillage (32) pour déverrouiller l'antivol,
un module d'authentification (40) pour authentifier sans fil un utilisateur de l'antivol et
un élément d'actionnement (34) pouvant être actionné par l'utilisateur et permettant d'activer le module d'authentification (40).

2. Antivol (10) selon la revendication 1,
**caractérisé en ce que**
il y a un changement de position pertinent lorsque la position de l'antivol par rapport à une position initiale change de plus d'une valeur prédéterminée dans au moins une direction spatiale, en particulier la position initiale étant la position de l'antivol (10) que le capteur détermine si le dispositif de détection de disque de frein (18) détecte la présence d'un disque de frein (16) et que l'antivol (10) n'a pas changé de position pendant une durée minimale prédéterminée, en particulier la durée minimale prédéterminée étant de l'ordre de quelques secondes et étant par exemple de 5 s.

3. Antivol (10) selon la revendication 1 ou 2,
**caractérisé en ce que**
le module d'alarme (38) est réalisé pour lire le capteur (36) uniquement si le dispositif de détection de disque de frein (18) détecte la présence d'un disque de frein (16) ; et/ou
le module d'alarme (38) est réalisé pour interrompre une émission d'alarme si aucun autre changement de position n'est détecté dans un laps de temps prédéterminé après le changement de position pertinent ou si une authentification de l'utilisateur a été effectuée avec succès.

4. Antivol (10) selon l'une au moins des revendications précédentes,
**caractérisé en ce que**
le module d'authentification (40) peut être activé par la mise en place de l'antivol sur un disque de frein (16).

5. Antivol (10) selon l'une au moins des revendications précédentes,
**caractérisé par**
un indicateur d'état (44) optique et/ou acoustique pour signaler l'état de charge d'une alimentation en énergie de l'antivol, en particulier à chaque activation du moteur de déverrouillage (32).

6. Antivol (10) selon l'une au moins des revendications précédentes,
**caractérisé en ce que**
l'antivol (10) comporte un pêne (24) qui peut être déplacé depuis une position ouverte jusque dans une position fermée et depuis la position fermée jusque dans une position de sur-course, et l'élément d'actionnement (34) est formé par un interrupteur de sur-course qui peut être actionné par un déplacement du pêne (24) jusque dans la position de sur-course.

7. Antivol (10) selon l'une au moins des revendications précédentes,
**caractérisé en ce que**
l'antivol (10) présente un corps d'antivol (12) et un pêne (24) logé de façon mobile en translation dans le corps d'antivol (12), et l'élément d'actionnement (34) peut être actionné par translation du pêne (24) jusque dans le corps d'antivol (12).

8. Système de fermeture comprenant un antivol pour disque de frein (10) selon l'une des revendications précédentes et un terminal mobile permettant à un utilisateur de l'antivol (10) de s'authentifier sur celui-ci.

9. Système de fermeture selon la revendication 8,
**caractérisé en ce que**
le terminal mobile comprend une unité d'émission/réception pour établir une connexion sans fil avec le module d'authentification (40) de l'antivol (10) ; et/ou
le terminal mobile est une télécommande ou un ordinateur portable, en particulier une montre intelligente, un smartphone, une tablette, etc.

10. Procédé de déverrouillage d'un antivol électronique pour disque de frein (10) selon la revendication 1, procédé dans lequel
le module d'authentification (40) est activé par l'actionnement de l'élément d'actionnement (34), et
le module d'alarme (38) émet une alarme si le capteur (36) détecte un changement de position pertinent de l'antivol (10).

11. Procédé selon la revendication 10,
**caractérisé en ce que**
il y a un changement de position pertinent lorsque la position de l'antivol (10) par rapport à une position initiale change de plus d'une valeur prédéterminée dans au moins une direction spatiale, en particulier la position initiale étant la position de l'antivol (10) que le capteur (36) détermine si le dispositif de détection de disque de frein (18) détecte la présence d'un disque de frein (16) et que l'antivol (10) n'a pas changé de position pendant une durée minimale prédéterminée, en particulier la durée minimale prédéterminée étant de l'ordre de quelques secondes et étant par exemple de 5 s.

12. Procédé selon la revendication 10 ou 11,
**caractérisé en ce que**
le capteur (36) n'est lu que tant que le dispositif de détection de disque de frein (18) détecte la présence d'un disque de frein.

13. Procédé selon l'une des revendications 10 à 12,
**caractérisé en ce que**
le module d'alarme (38) interrompt l'émission d'alarme si aucun autre changement de position n'est détecté dans un laps de temps prédéterminé après le changement de position pertinent ou si une authentification de l'utilisateur a été effectuée avec succès.

14. Procédé selon l'une des revendications 10 à 13,
**caractérisé en ce que**
le module d'authentification (40) est activé si le dispositif de détection de disque de frein (18) détecte la mise en place de l'antivol (10) sur un disque de frein (16).

15. Procédé selon l'une des revendications 10 à 14,
**caractérisé en ce que**
l'élément d'actionnement (34) est actionné par translation d'un pêne (24) de l'antivol (10) jusque dans un corps (12) de l'antivol (10) et/ou par déplacement d'un pêne (24) de l'antivol (10) depuis une position fermée jusque dans une position de sur-course.
